# DEMANDE DE BREVET EUROPEEN

(11) **EP 4 373 099 A1**
(43) Date de publication de la demande: **22.05.2024**
(21) Numéro de dépôt: 23206740.5
(22) Date de dépôt: 30.10.2023
(51) Int. Cl.: H04N 21/262, H04L 65/611, H04N 21/6405, H04N 21/845, H04N 21/2343

(54) **PROCÉDÉ DE GESTION DE L'ACCÈS À UNE CONTENU A LECTURE D'UN CONTENU MULTIMÉDIA**

(30) Priorité: 21.11.2022 FR 2212059
(71) Demandeur: Orange, 92130 Issy-les-Moulineaux (FR)
(72) Inventeur: RIVOALEN, Mathieu, 92326 Chatillon (FR); MARCHAND, Hervé, 92326 Chatillon (FR)

(57) **Abrégé**

L'invention concerne un procédé de gestion de l'accès, par un dispositif de lecture, à un contenu multimédia (CNT), caractérisé en ce qu'il comprend une étape d'obtention, pour un même contenu, d'un ensemble de canaux de diffusion en multicast (CDD1-CDD4) associés à des instants de diffusion respectifs (11-14) espacés temporellement, et en ce qu'il comprend une étape de demande de restitution de données représentatives de canaux multicast obtenus lors de l'étape d'obtention, et de réception d'une sélection d'un canal de diffusion en multicast parmi les canaux de diffusion inclus dans la demande de restitution.

## Description

### Domaine technique

Le domaine de l'invention est celui des contenus multimédias numériques, à savoir les contenus audio et/ou vidéo numériques, également appelés contenus audiovisuels.

L'invention se rapporte tout particulièrement à un procédé de gestion de lecture d'un contenu multimédia diffusé en mode multicast.

Les contenus visés ici sont des contenus découpés en segments associés à plusieurs débits d'encodage respectifs sélectionnables sur requêtes émises depuis un dispositif de lecture de flux multimédias.

Un dispositif de lecture vise tout dispositifs aptes à recevoir des flux multimédias par exemple un décodeur, un téléphone mobile, une tablette, etc.

Le contenu visé ici est un contenu ayant une heure de diffusion programmée. Un tel contenu est par exemple un contenu « live » diffusé par une chaîne de télévision.

### Etat de la technique

Il arrive parfois de manquer le début d'un programme télévisé (film, série, etc.). Une fonction appelée « lire du début » ou « rattrapage » (appelée également « Start Over » ou « Restart » par l'homme du métier) permet de reprendre, à tout moment, le programme en cours de diffusion depuis son commencement. Par exemple, si un film commence à 20h50 sur un canal de diffusion (une chaîne de télévision) et qu'un utilisateur zappe sur cette chaîne de télévision à 21h17, il peut lancer la fonction de "start over" afin de pouvoir lire le contenu depuis son début.

Généralement, la diffusion de contenus en direct s'appuie sur une technologie de diffusion en multidiffusion (aussi appelé diffusion « multipoint » ou « diffusion de groupe » ou encore « Multicast » par l'homme du métier. Cette technologie permet d'économiser énormément de bande passante dans le réseau d'un opérateur qui gère la diffusion car le contenu est répliqué au plus près des dispositifs de lecture. Par contre, quand un dispositif de lecture requiert l'utilisation de la fonction « lire du début », un accès au contenu demandé déclenche un basculement automatique de la technologie multicast vers une technologie de diffusion de contenu en point à point (unicast). La consommation de bande passante dans le réseau de l'opérateur augmente donc considérablement du fait de la transmission en point à point entre le serveur contenu et l'ensemble des dispositifs de lecture ayant demandé une utilisation de la fonction « start over » ; par exemple lorsque le contenu demandé est un contenu à forte audience, le nombre de connexions en point à pont peut devenir gigantesque et entraîner un phénomène dit de goulot d'étranglement de la bande passante, qui nuit aux performances du réseau.

L'invention offre une solution ne présentant pas les inconvénients de l'état de la technique.

### L'invention

A cet effet, selon un premier aspect fonctionnel, l'invention a pour objet un procédé de gestion de l'accès, par un dispositif de lecture, à un contenu multimédia, caractérisé en ce qu'il comprend une étape d'obtention, pour un même contenu, d'un ensemble de canaux de diffusion en multicast associés à des instants de diffusion respectifs espacés temporellement, et en ce qu'il comprend une étape de demande de restitution de données représentatives de canaux multicast obtenus lors de l'étape d'obtention, et de réception d'une sélection d'un canal de diffusion en multicast parmi les canaux de diffusion inclus dans la demande de restitution.

Selon l'invention, lorsqu'une diffusion en multicast est prévue sur un canal de diffusion pour un contenu multimédia, plusieurs autres canaux de diffusion en multicast sont créés pour ce même contenu télévisé avec des instants de diffusion étalés dans le temps, respectivement. Selon l'invention, des données relatives aux canaux créés sont restituées et sélectionnables individuellement. Une fois le canal de diffusion multicast sélectionné parmi les canaux créés pour le même contenu, le dispositif de lecture restitue le flux issu du canal sélectionné.

La lecture du contenu peut ainsi être réalisée depuis un instant de lecture correspondant qui est fonction du canal sélectionné en mode multicast. L'utilisation du mode multicast en lieu et place du mode unicast offre une qualité de restitution optimale et réduit considérablement la bande passante sur le réseau lors de l'accès à un contenu.

Selon un premier mode de réalisation, 1es données restituées ne visent qu'une partie dudit ensemble de canaux de diffusion en multicast. Ce premier mode évite de restituer toutes les données relatives à tous les canaux créés sans quoi l'écran serait surchargé d'information. De plus, les données représentatives peuvent avoir une taille en octets non négligeable ; par exemple si les données sont des images voire des vidéos vouées à être restituées en liaison avec les canaux concernés respectivement, ne transmettre qu'une partie des données représentatives des canaux diminue la taille du message à transmettre et diminue le traitement du message à la fois par le dispositif de lecture émetteur du message et par le dispositif de restitution récepteur du message.

Selon un deuxième mode de réalisation, qui pourra être mis en oeuvre alternativement ou cumulativement avec le précédent mode, les données représentatives de canaux multicast incluses dans la demande de restitution sont fonction du type de navigation souhaité, une navigation visant un passage d'un canal de diffusion en multicast vers un autre canal de diffusion en multicast. Ce mode permet de n'afficher que les canaux pertinents à la réalisation d'une action de navigation, une action de navigation consistant à effectuer des sauts entre canaux de diffusion multicast se traduisant par des sauts temporels dans le contenu. Les sauts en question permettent de réaliser un retour en arrière dans le contenu ou une avance dans le contenu. Les variantes suivantes sont des cas possibles du choix des données représentatives de canaux multicast en fonction du type de navigation
Selon une première variante du deuxième mode, si la navigation est un saut temporel représentatif d'un retour en arrière dans le contenu, seules des données relatives aux canaux ayant un instant de création postérieur à l'instant courant sont restitués. Selon une deuxième variante du deuxième mode, qui pourra être mis en oeuvre alternativement ou cumulativement avec la première variante, si la navigation est un saut temporel représentatif d'une avance dans le contenu, seules des données relatives aux canaux ayant un instant de création antérieurs à l'instant courant sont restitués. Les deux variantes qui précédent permettent de restituer que des données relatives à des canaux capables de réaliser un retour ou une avance dans le contenu selon la variante choisie. le fait de réduire le nombre de canaux réduit la surface occupée sur le dispositif de restitution. L'expérience utilisateur ne peut être que meilleure.

Enfin, Selon un troisième mode de réalisation, qui pourra être mis en oeuvre alternativement ou cumulativement avec les précédents modes, les données inclues des données relatives au décalage temporel entre canaux en vue d'une restitution des canaux dans un ordre temporel donné. Ce troisième mode permet de visualiser les différents canaux multicast liés à un même contenu et l'ordre dans lequel ils ont débuté la diffusion respectivement. Cette information facilite la sélection d'un canal lors d'un souhait de relecture du contenu par exemple pour retrouver/revoir une scène d'un film ou une action lors d'une compétition sportive par exemple un but lors d'un match de football
Selon un premier aspect matériel, l'invention se rapporte à une entité de gestion de l'accès, par un dispositif de lecture, à un contenu multimédia, caractérisé en ce que l'entité comprend un processeur configuré pour réaliser les étapes suivantes : une étape d'obtention, pour un même contenu, d'un ensemble de canaux de diffusion en multicast associés à des instants de diffusion respectifs espacés temporellement, et en ce qu'il comprend une étape de demande de restitution de données représentatives de canaux multicast obtenus lors de l'étape d'obtention, et de réception d'une sélection d'un canal de diffusion en multicast parmi les canaux de diffusion inclus dans la demande de restitution.

Selon un deuxième aspect matériel, l'invention se rapporte à un dispositif de lecture comprenant une entité de gestion telle que définie ci-dessus.

Selon un troisième aspect matériel, l'invention se rapporte à un programme d'ordinateur apte à être mis en oeuvre sur une entité telle que définie ci-dessus, le programme comprenant des instructions de code qui, lorsqu'il est exécuté par un processeur, réalise les étapes du procédé de gestion définies ci-dessus.

Enfin, selon un quatrième aspect matériel, l'invention se rapporte à un support de données sur lequel a été mémorisée au moins une série d'instructions de code de programme pour l'exécution d'un procédé de gestion tel que défini ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle du dispositif de lecture ;
[Fig. 3] La figure 3 est un schéma synoptique simplifié de la structure matérielle du serveur ;
[Fig. 4] La figure 4 illustre plusieurs canaux de diffusion pour un même contenu avec des instants de diffusion distincts étalés dans le temps.
[Fig. 5] La figure 5 illustre un mode de réalisation d'un interface graphique affichée sur un écran, les informations relatives aux canaux sélectionnables étant organisés sous forme de cadre sélectionnable.
[Fig. 6] La figure 6 est une vue schématique d'un mode de réalisation du procédé de l'invention.

### Description détaillée d'un exemple de réalisation illustrant l'invention :

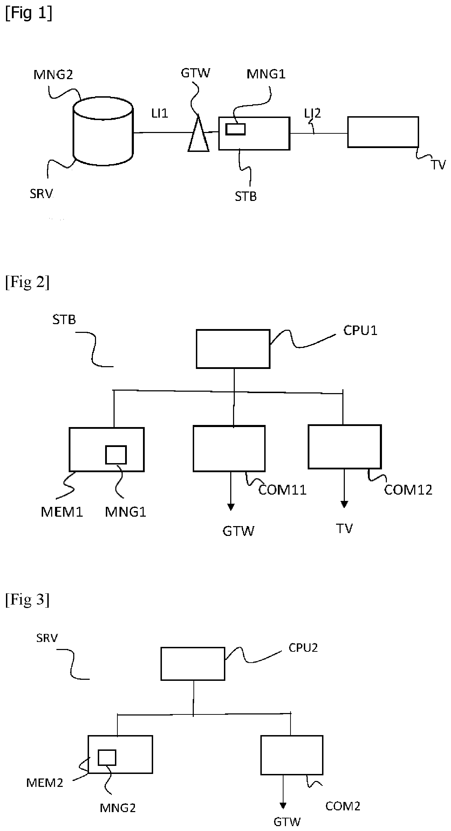

La figure 1 représente un système informatique SYS dans lequel est mis en oeuvre un réseau de diffusion de contenus appelé CDN (Content Distribution Network) par l'homme du métier depuis lequel sont transmis des contenus à destination de dispositifs clients ou dispositifs de lecture de contenus.

Dans notre exemple, le système comprend un seul dispositif de lecture STB. Cependant l'invention s'applique à un nombre quelconque de dispositifs de lecture.

Le dispositif de lecture est par exemple un décodeur numérique.

Le contenu multimédia visé ici est un contenu vidéo correspondant par exemple à une chaîne de télévision sur laquelle sont diffusés des programmes télévisés ayant une heure de début correspondant à une heure de diffusion programmée et une heure de fin. Le contenu en question en diffusé en mode multicast.

Le dispositif de lecture dispositif de restitution STB est connecté à un terminal de restitution TV tel qu'une télévision.

Dans notre exemple, le dispositif de lecture STB est connecté sur un port du dispositif de restitution TV ; le dispositif de lecture dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW. Le contexte du réseau local est donné à titre d'exemple et pourrait être transposé aisément à un réseau Internet de type « best effort », un réseau d'entreprise, etc.

La passerelle GTW est apte à communiquer via un réseau de télécommunication LI1 tel qu'un réseau étendu WAN connu de l'homme du métier.

Le système informatique SYS met en oeuvre un réseau de diffusion de contenus appelé CDN (Content Distribution Network) par l'homme du métier depuis lequel des contenus sont transmis à destination de dispositifs clients ou dispositifs de lecture de contenus STB.

Le réseau CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN.

Le serveur de contenus SRV se trouve, dans notre exemple, dans le réseau étendu WAN.

Le serveur de contenus SRV reçoit par exemple des chaînes de contenus de télévision numérique en provenance d'un réseau de télévision diffusée (non représenté), et les met à disposition des terminaux clients, ici le dispositif de lecture STB.

Les contenus CNT sont mis à disposition dans un format donné. Un tel contenu CNT est, par exemple, un contenu téléchargé en mode de streaming adaptatif. La norme MPEG-DASH (pour l'anglais "Dynamic Adaptive Streaming over HTTP", en français « diffusion en flux adaptatif dynamique sur HTTP ») est un standard de format de diffusion audiovisuelle sur Internet ; ce standard se base sur la préparation du contenu en différentes représentations de qualité et débit variables, découpées en segments de courte durée (de l'ordre de quelques secondes), également appelés « chunks » par l'homme du métier. Chacun de ces segments est rendu disponible individuellement au moyen d'un protocole d'échange entre le terminal de restitution et le serveur fournisseur de contenus multimédias. Le protocole principalement ciblé est le protocole HTTP, mais d'autres protocoles (par exemple FTP) peuvent également être utilisés. L'organisation des segments et les paramètres associés sont publiés dans un fichier de description au format XML. Nous ne rentrerons pas plus dans les détails de ce mode de téléchargement car sans intérêt pour l'exposé de l'invention.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le décodeur STB peut transmettre un contenu à restituer au dispositif de restitution TV via un module de communication COM12. Ce module COM12 est par exemple une liaison HDMI.

Le décodeur STB communique avec la passerelle via un module Ethernet pour une communication locale avec fils ou via un module radio de type WiFi pour une communication locale sans fils avec la passerelle résidentielle GTW. Le module en question est référencé CMO11 sur la figure 2.

Le décodeur STB comprend une entité de téléchargement en mode streaming (non représentée) apte à gérer le téléchargement de segments du contenu. Le décodeur STB comprend également une entité de gestion MNG1, dite première entité de gestion dans la suite, objet de l'invention, dont la fonction sera décrite ci-dessous.

En référence à la figure 3, le serveur SRV est également équipé d'au moins un processeur CPU2 et de mémoires MEM2 pour la réalisation de traitement informatique. Le serveur est également équipé d'une entité de gestion MNG2, dite deuxième entité, apte à gérer la transmission d'un contenu du serveur SRV à destination d'un ou plusieurs dispositifs de lecture. Le serveur SRV communique avec la passerelle GTW via réseau WAN. Le serveur comporte, la communication avec le réseau WAN, un module de communication référencé COM2 sur la figure 3.

Selon l'invention, la première entité de gestion MNG1 installée sur le dispositif de lecture STB réalise les étapes suivantes :
Une étape d'obtention, pour un même contenu, d'un ensemble de canaux de diffusion en multicast CDD1-CDD4 associés à des instants de diffusion respectifs I1-I4 espacés temporellement ;
et une étape de demande de restitution de données représentatives de canaux multicast obtenus lors de l'étape d'obtention, et de réception d'une sélection d'un canal de diffusion en multicast parmi les canaux de diffusion en multicast restitués ..

Cette étape de restitution peut être exécutée par exemple lorsqu'un utilisateur souhaite accéder au contenu en question, ou à un autre moment par exemple au cours de la lecture du contenu pour informer des canaux accessibles et donc des flux accessibles pour un même contenu.

Suite à la restitution des différents canaux sélectionnables, le terminal de lecture dispositif de restitution STB reçoit une sélection d'un canal et requiert la restitution du flux multicast concerné sur le dispositif de restitution.

L'invention offre donc la possibilité de sélectionner un flux parmi plusieurs flux et donc, du fait du décalage temporel entre canaux de diffusion multicast créés pour un même contenu, par exemple de naviguer dans le contenu en passant d'un canal vers un autre canal et ainsi réaliser des sauts temporels dans le contenu par exemple pour revoir une scène qui a déjà été diffusée sur un voire plusieurs canaux.

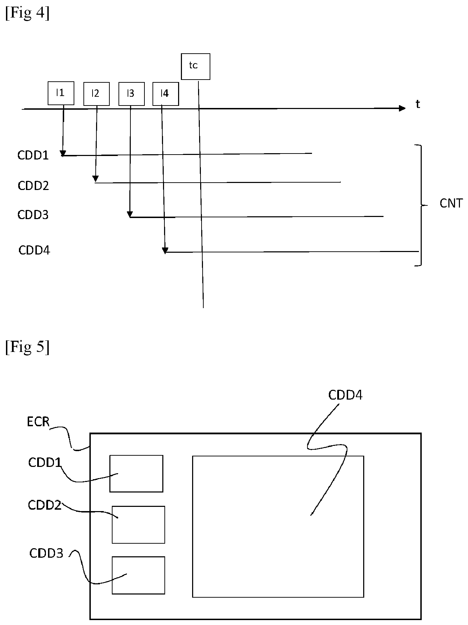

Le figure 4 illustre différents canaux créés espacés temporellement relativement à un même contenu CNT. Un premier flux canal de diffusion multicast CDD1 est créé à l'instant t1. Un deuxième canal de diffusion multicast CDD2 est créé à l'instant t2, un troisième canal de diffusion multicast CDD3 est créé à l'instant t3, etc. Tous les canaux multicast créés diffusent le même contenu CNT.

Les heures de démarrage de diffusion de programmes sont accessibles via une liste comprenant l'ensemble des canaux.

Un utilisateur peut accéder au contenu, par exemple à un instant tc ; à cet instant tc, l'utilisateur peut sélectionner dans la liste des canaux l'un des canaux sélectionnables CDD1-CDD4 pour lire le contenu CNT.

On verra dans la suite, en liaison avec la figure 5, qu'une interface INT restituée sur l'écran TV permet de restituer tout ou partie de la liste de canaux créés permettant ainsi de sélectionner l'un des canaux créés.

Sur cette figure 4, différents canaux CDD1 à CDD4 sont créés avec un décalage temporel. Le décalage temporel entre deux flux consécutifs est constant dans notre exemple mais pourrait aussi être variable.

A noter que le nombre de canaux peut varier selon le contenu et/ou sa durée. Par exemple, si le contenu est un contenu à forte audience et donc susceptible d'être très demandé, un court espacement tel que deux secondes peut être pertinent. On comprendra aisément que pour un même espacement temporel, plus la longueur en temps du contenu est importante, plus le nombre de canaux de diffusion est grand.

En d'autres mots, suite au démarrage de la diffusion d'un contenu, à des instants donnés, par exemple toutes les N minutes (N = 2 minutes par exemple), un nouveau canal multicast est créé pour diffuser le contenu depuis son début.

A un instant donné, plusieurs canaux multicast coexistent donc avec des décalages temporels.

Tous les canaux de diffusion créés peuvent être déclarées dans un document appelé plan de service live.

Précisons ici qu'une création d'un canal peut consister en une instanciation d'un canal.

La figure 5 illustre un mode de réalisation de l'interface introduite ci-dessus. Dans ce mode, le flux télévisé correspondant au dernier flux live précédant la réception d'une commande d'accès au contenu par le dispositif de lecture STB est restitué dans un cadre occupant un espace important que les autres flux issus d'autres canaux par rapport à la surface de l'écran. Les autres flux issus d'autres canaux sont représentés dans des cadres plus petits. Les petits cadres peuvent comprendre une image voire une vidéo ou des informations liées à l'heure de démarrage à laquelle la diffusion en multicast a débuté, ou toutes autres informations.

L'invention ne se limite bien évidemment pas à ce mode de réalisation, d'autres configurations de l'interface sont envisageables. Par exemple, seule une partie des canaux créés sont restitués. Tout ou partie des canaux futurs, c'est-à-dire non encore créés à l'instant de la demande d'accès au contenu CNT, peuvent aussi être restitués pour information.

On verra dans la suite que la restitution des canaux qui sont prévus pour le futur permet à un utilisateur de retarder le moment où il va souhaiter visualiser le contenu.

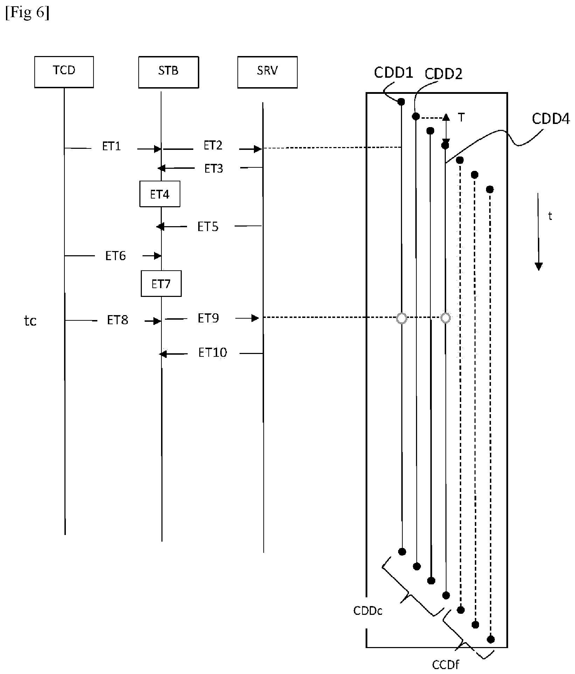

La figure 6 illustre de façon schématique les étapes d'un mode de réalisation. Trois axes sont représentés et un axe du temps permet de comprendre l'ordre des étapes.. Un premier axe correspond à une télécommande TCD, un deuxième axe correspond au dispositif de lecture STB et un troisième axe qui correspond au serveur SRV.

Au cours de ce mode de réalisation, plusieurs canaux de diffusion CDD1-CDDn (n est un entier) vont être créés à espaces réguliers, par exemple toutes les deux minutes, à l'image de la figure 4.

Dans notre exemple, la deuxième entité MNG2 gérée par le serveur SRV a la charge de la création des canaux de diffusion multicast pour un même contenu. Prenons un exemple d'un match de Foot dont la diffusion officielle est programmée un samedi soir à 20h00 (I1=20h00) sur un canal milticast CDD1. La deuxième entité va créer des canaux par exemple toutes les 2 minutes à 20h02 via un canal CDD2, à 20h03 via un canal CDD3, etc.

Le procédé comprend plusieurs étapes référencées ETk.

Lors d'une étape ET1, une commande de sélection SEL d'un contenu CNT est transmise depuis la télécommande au dispositif de lecture STB.

Lors d'une étape ET2, le dispositif de lecture STB reçoit la commande et l'exécute ; l'exécution de la commande entraîne une transmission d'une demande d'accès au contenu CNT à destination du serveur SRV.

A cet instant, dans notre exemple, quatre canaux CDDc sont déjà créés à savoir les canaux CDD1-CDD4 ; la diffusion du contenu via ces canaux a déjà démarré.

On suppose également que des canaux CDDf dits « canaux futurs » sont prévus à la création. Sur la figure 6, trois canaux futurs CDDf sont illustrés sur la figure en pointillés.

On verra qu'il n'est pas nécessaire de restituer tous les canaux créés CDDc ou futurs CDDf.

A l'instant de la demande d'accès au contenu, dans notre exemple, le dernier canal de diffusion multicast créé CDDc est le canal CDD4.

Dans notre exemple, le serveur SRV transmet en réponse lors d'une étape ET3, le contenu CNT depuis le dernier canal créé à savoir le canal CDD4 pour que la restitution démarre au plus près du début du programme télévisé et sans délai. Le canal suivant CDD5 aurait pu aussi être choisi en lieu et place du canal CDD4 ; cela entraîne éventuellement un délai d'attente mais permet une restitution du programme télévisé depuis son début et donc dans son intégralité.

Le canal choisi est donc dans notre exemple le canal CDD4.

Le dispositif de lecture STB reçoit ensuite le contenu CNT via le canal CDD4 lors d'une étape ET5 et le restitue.

Dans notre exemple, lors d'une étape qui fait suite à l'étape ET5, le dispositif de lecture STB reçoit une liste de canaux de diffusion multicast. Dans notre exemple, cette liste comprend tous les canaux de diffusion créés au moment de la réception de la demande d'accès lors de l'étape ET2. Cette liste est mise à jour ultérieurement par exemple au fur et à mesure des créations de canaux de diffusion. On verra ci-dessous que des variantes sont possible à propos de cette liste.

La liste peut être transmise depuis le serveur à différents moments. Par exemple, la liste peut être transmise par le serveur SRV en même temps que le flux issu du canal CDD4. La liste peut aussi être transmise avant un accès au contenu ou ultérieurement. Par exemple, lorsque l'utilisateur souhaite naviguer dans le contenu et réaliser des sauts temporels (retour « ou avance » dans le contenu), une commande de navigation (par exemple une avance >> dans le contenu) peut déclencher une transmission de la liste des canaux par le serveur SRV.

Précisons ici qu'une commande de retour est souvent symbolisée par le symbole «, et l'avance par le symbole ».

Lors d'une étape ET6, une commande de retour << est transmise depuis la télécommande TCD.

Lors d'une étape ET7, le dispositif de lecture STB reçoit la commande de retour << et restitue la liste de canaux de diffusion en cours de diffusion reçue du serveur SRV lors de l'étape ET5, voire une liste mise à jour. La restitution s'effectue par exemple via une interface homme machine INT telle que représentée sur la figure 5.

A ce stade, l'utilisateur peut sélectionner avec sa télécommande TCD un canal parmi les canaux créés CDD1-CDD3, par exemple le canal CDD2. Si d'autres canaux se créés avant la sélection du canal avec la télécommande TCD, la liste est mise à jour et transmise au dispositif de lecture STB.

Lors d'une étape ET8, une commande de sélection de canal CDD2 est transmise par la télécommande TCD.

Lors d'une étape ET9, le dispositif de lecture STB transmet une commande de sélection du canal CDD2 au serveur SRV.

Le serveur SRV transmet ensuite lors d'une étape ET10 le flux diffusé sur le canal CDD2.

Le dispositif de lecture STB reçoit en retour le contenu CNT via le deuxième canal CDD2. Le flux diffusé en multicast sur ce canal CDD2 ayant démarré en avance avec un décalage d'une durée T par rapport au canal CDD, on comprend que la lecture du flux via le canal CDD2 a pour effet de poursuivre la lecture à un instant (tc-T), tc étant l'instant de lecture courant du contenu live, la durée T visant le décalage temporel entre les canaux CDD2 et CDD4.

Ultérieurement, l'utilisateur peut poursuivre la navigation et sélectionner un autre canal de diffusion selon qu'il souhaite réaliser un retour « dans le contenu ou une avance » dans le contenu. Un retour s'effectuera en sélectionnant un canal ayant une date de création ultérieur ; une avance s'effectuera en sélectionnant un canal ayant une date de création antérieur.

Le mode décrit ci-dessus peut faire l'objet de variantes décrites ci-dessous.

Selon une variante, l'interface ne comprend que les flux en cours de diffusion CDDc ; les canaux non encore créés ne sont pas restitués. Cette variante allège la quantité d'information restituée sur l'écran.

Selon une autre variante, dès qu'un canal CDDn est créé, celui-ci est ajouté dans la liste et devient potentiellement sélectionnable sur l'interface INT.

Selon une autre variante, les canaux de diffusion CDDf, dits canaux futurs, dont les instants de diffusion respectifs sont à venir, sont restitués sur l'écran en complément des canaux déjà créés. Dans cette configuration, une sélection d'un tel canal dit future entraîne un délai d'attente avant restitution. Par exemple, lorsque l'utilisateur souhaitant visionner le contenu n'est pas prêt, cette variante permet d'informer l'utilisateur des heures de diffusion sur ces canaux futurs.

Selon une variante, les canaux restitués sont fonction du type de navigation souhaité.

Par exemple, lorsque la navigation est un saut temporel représentatif d'un retour en arrière dans le contenu, seuls des canaux ayant un instant de création postérieur à l'instant courant sont restitués. Ou lorsque la navigation est un saut temporel représentatif d'une avance dans le contenu, seuls des canaux ayant un instant de création antérieurs à l'instant courant sont restitués

On a vu précédemment, en liaison avec la figure 5, une façon de représenter les différents canaux de diffusion sur l'interface INT.

Selon une variante, les canaux CDDn sont affichés sur l'écran simultanément sous forme de mosaïque. D'autres manières de restituer les différents canaux sélectionnables peuvent bien évidemment être imaginées.

Les différents flux des différents canaux peuvent être restitués sur l'écran dans la mosaïque.

Selon une variante, des imagettes sont restituées en liaison avec les différents canaux CDDn, respectivement.

A la place d'une restitution du flux ou d'une imagette représentative du flux, des informations textuelles, voire sonores, peuvent être restituées. Les informations peuvent inclure par exemple des données pertinentes aidant à la sélection telles que l'heure à laquelle a débuté la restitution du flux sur le canal concerné.

Précisons enfin ici que le terme module ou le terme entité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion de l'accès, par un dispositif de lecture (STB), à un contenu multimédia (CNT), **caractérisé en ce qu'**il comprend une étape d'obtention, pour un même contenu, d'un ensemble de canaux de diffusion en multicast associés à des instants de diffusion respectifs espacés temporellement, et **en ce qu'**il comprend une étape de demande de restitution de données représentatives de canaux multicast obtenus lors de l'étape d'obtention, et de réception d'une sélection d'un canal de diffusion en multicast parmi les canaux de diffusion inclus dans la demande de restitution.

2. Procédé de gestion selon la revendication 1, **caractérisé en ce que** les données restituées ne visent qu'une partie dudit ensemble de canaux de diffusion en multicast.

3. Procédé de gestion selon la revendication 1 ou 2, caractérisé en ce les données représentatives de canaux multicast incluses dans la demande de restitution sont fonction du type de navigation souhaité, une navigation visant un passage d'un canal de diffusion en multicast vers un autre canal de diffusion en multicast.

4. Procédé de gestion selon la revendication 3, **caractérisé en ce que** si la navigation est un saut temporel représentatif d'un retour en arrière dans le contenu, seules des données relatives à des canaux ayant un instant de création postérieur à l'instant courant sont restituées.

5. Procédé de gestion selon la revendication 3, **caractérisé en ce que** si la navigation est un saut temporel représentatif d'une avance dans le contenu, seules les données relatives à des canaux ayant un instant de création antérieurs à l'instant courant sont restitués.

6. Procédé de gestion selon la revendication 1, **caractérisé en ce que** les données inclues des données relatives au décalage temporel entre canaux en vue d'une restitution des canaux dans un ordre temporel donné.

7. Entité de de gestion de l'accès (MNG1), par un dispositif de lecture (STB), à un contenu multimédia (CNT), **caractérisé en ce que** l'entité comprend un processeur (CPU1) configuré pour réaliser les étapes suivantes : une étape d'obtention, pour un même contenu, d'un ensemble de canaux de diffusion en multicast associés à des instants de diffusion respectifs espacés temporellement, et **en ce qu'**il comprend une étape de demande de restitution de données représentatives de canaux multicast obtenus lors de l'étape d'obtention, et de réception d'une sélection d'un canal de diffusion en multicast parmi les canaux de diffusion inclus dans la demande de restitution.

8. Programme d'ordinateur apte à être mis en oeuvre sur une entité de gestion (MNG1) telle que définie dans la revendication 7, le programme comprenant des instructions de code qui, lorsqu'il est exécuté par un processeur, réalise les étapes du procédé définies dans la revendication 1.

9. Support de données sur lequel a été mémorisée au moins une série d'instructions de code de programme pour l'exécution d'un procédé selon la revendication 1.
